# FASCICULE DE BREVET EUROPEEN

(11) **EP 0 432 682 B1**
(45) Date de publication et mention de la délivrance du brevet: **18.05.1994**
(21) Numéro de dépôt: 90123680.2
(22) Date de dépôt: 10.12.1990
(51) Int. Cl.: G02B 6/44

(54) **Dispositif d'étanchéité longitudinale pour l'âme d'un câble optique**
Längswasserdichte Vorrichtung für die Seele eines faseroptischen Kabels
Longitudinally watertight device for optical fibre cable core

(30) Priorité: 13.12.1989 FR 8916499
(43) Date de publication de la demande: 19.06.1991
(73) Titulaire: ALCATEL CIT, 75008 Paris (FR)
(72) Inventeur: Crespo-Ruiz, François, F-75013 Paris (FR); Cachot, Jacques, F-91240 Saint Michel sur Orge (FR); Pelet, André, F-78310 Maurepas (FR)
(74) Mandataire: Weinmiller, Jürgen

(56) Documents cités:
- DE-A- 3 127 135
- FR-A- 2 435 845
- GB-A- 2 187 304
- PATENT ABSTRACTS OF JAPAN, vol. 10, no. 45 (P-430)[2102], 21 février 1986; & JP-A-60 189 705

## Description

L'invention concerne un câble optique équipé d'un dispositif d'étanchéité longitudinale pour l'âme dudit câble optique, notamment pour les liaisons sous-marines. L'âme d'un câble optique est constituée classiquement d'un tube en acier inoxydable, contenant un faisceau de fibres optiques disposées de manière lâche dans la cavité du tube. Le tube est recouvert d'une épaisse gaine de polyéthylène. Le tube est une protection mécanique du faisceau de fibres. Il sert aussi, dans certains cas, de conducteur électrique pour alimenter les équipements immergés de la liaison, tels que les répéteurs.

Un tel câble doit être étanche transversalement sous forte pression, mais en plus il doit être résistant à la propagation longitudinale de l'eau si celle-ci s'infiltre à la suite d'une détérioration du câble. Une résistance à la propagation longitudinale de l'eau est obtenue classiquement en remplissant le tube avec une matière visqueuse hydrophobe. Cependant cette résistance n'est effective qu'au bout d'une certaine longueur de câble intact. A un accès du câble dans un répéteur, l'étanchéité n'est pas assurée dans tous les cas par une longueur suffisante de câble intact. Pour éviter une propagation de l'eau à l'intérieur d'un répéteur, il est connu, notamment par la demande de brevet français n°2 595 149, de placer un dispositif d'étanchéité longitudinale à proximité de chacun des accès de câble dans un répéteur. Chaque répéteur est muni de deux amorces de câble ayant une faible longueur, qui sont terminées chacune par une boîte d'épissurage permettant de connecter un câble ayant une grande longueur. Un dispositif d'étanchéité longitudinale est inséré sur chaque amorce, en la sectionnant en deux tronçons. Le dispositif d'étanchéité connu comporte :
- un bloc de matière plastique, moulé en recouvrant à la fois l'extrémité du tronçon du tube situé du côté du répéteur et les fibres optiques, sur une portion du faisceau située entre les deux tronçons du tube; l'extrémité du tronçon du tube situé du côté du répéteur comportant une empreinte en creux tout autour du tube, pour accrocher le bloc de matière plastique sur l'extrémité du tube;
- une douille métallique entourant le bloc de matière plastique et qui est brasée à l'extrémité du tronçon du tube situé du côté de la boîte d'épissurage;
- un bouchon métallique traversé par le tronçon du tube situé du côté du répéteur, de telle sorte que l'extrémité du tube dépasse de ce bouchon métallique, pour porter le bloc de matière plastique; le tube étant brasé au bouchon, du côté opposé au bloc de matière plastique;
- une bague de serrage, enfilée sur la douille, permettant de serrer la douille sur le bouchon métallique, ce dernier étant muni d'un filetage extérieur; la fixation définitive de la douille sur le bouchon et, le cas échéant, la continuité électrique étant assurées par des points de soudure;
- un produit hydrophobe injecté dans l'espace restant entre la douille et le bloc de matière plastique.

L'empreinte en creux autour du tube a pour fonction d'accrocher le bloc de matière plastique, moulé sur l'extrémité du tube, de façon à obtenir une étanchéité durable en dépit d'éventuels interstices que peut engendrer, le long de la paroi intérieure du tube, le rétreint subi par la matière plastique moulée. Ce dispositif est bien adapté lorsque les dimensions transversales relatives du tube et du faisceau de fibres autorisent la réalisation d'une empreinte en creux sur le tube sans que la réduction du diamètre intérieur du tube, résultant de cette empreinte, n'empêche le passage des fibres; par exemple : 4 et 2 millimètres pour les diamètres externe et interne du tube, et environ 0,8 millimètre pour le faisceau de fibres.

Si on utilise un tube de dimensions transversales nettement plus petites pour un même encombrement du faisceau de fibres, par exemple 2,3 millimètres de diamètre externe, et 1,5 millimètre de diamètre interne, notamment pour réduire l'encombrement des amorces de câbles, ces faibles dimensions ne permettent pas d'accrocher facilement un bloc de matière plastique moulé sur l'extrémité du tube. En effet, il n'est pas possible de réaliser une empreinte en creux ayant une profondeur suffisante pour permettre un bon accrochage du bloc de matière plastique tout en conservant un diamètre intérieur de dimension suffisante pour permettre le passage du faisceau de fibres.

Le but de l'invention est de proposer un dispositif d'étanchéité longitudinale qui soit réalisable et fiable, en particulier pour une âme de câble comportant un tube de faible diamètre, par exemple 2,3 millimètres de diamètre extérieur et 1,5 millimètre de diamètre intérieur.
Ce but est atteint selon l'invention par le câble optique tel que défini par la revendication 1.

Ce dispositif d'étanchéité ne cause aucun problème pour la mise en place des fibres optiques dans le tube, même si son diamètre intérieur est de faible dimension, car il ne subit plus de réduction. D'autre part, il permet un très bon accrochage du bloc de matière plastique, moulé sur le canon, puisque la surface externe de celui-ci comporte au moins une cannelure transversale ayant une profondeur suffisante pour permettre un bon accrochage de la matière plastique.

Des caractéristiques d'une mise en oeuvre préférée de l'invention sont définies par les revendications secondaires et seront commentées ci-après.

Selon une telle caractéristique, la cavité du canon a une forme évasée, au moins à son extrémité libre située du côté du second tronçon de tube. La cavité du canon a donc une forme conique du côté où est situé le bloc de matière plastique moulé. Par conséquent, la matière plastique moulée à l'intérieur du canon a, elle aussi, une forme conique qui maintient une très bonne étanchéité, même dans le cas où il y a un rétreint de la matière plastique, car, en cas d'infiltration d'eau, sous la pression de cette dernière, le bloc de matière plastique se déforme par fluage, jusqu'à ce que sa surface conique soit parfaitement appuyée sur la surface conique de la cavité du canon. Ainsi l'étanchéité sur la paroi du canon augmente quand la pression augmente.

Selon une autre caractéristique, la cavité du canon a une section circulaire, avec un diamètre constant sur une certaine longueur du canon a partir de l'extrémité du canon située du côté du premier tronçon du tube; et avec un diamètre croissant ensuite le long du canon jusqu'à l'extrémité du canon située du coté opposé au premier tronçon du tube. Ceci permet de prolonger la zone d'imprégnation du faisceau de fibres par la matière plastique du bloc d'enrobage, et par suite, d'allonger les lignes de fuite de l'eau le long du faisceau.

Selon une autre caractéristique, d'une part le bouchon métallique comporte un premier trou ayant un diamètre sensiblement égal au diamètre externe du tube; et comporte un second trou prolongeant le premier, et ayant un diamètre plus petit, afin de constituer un épaulement; le premier tronçon du tube étant placé dans le premier trou, en butée contre cet épaulement, et étant brasé au bouchon, à l'embouchure du premier trou; et d'autre part, la douille métallique comporte un premier trou ayant un diamètre sensiblement égal au diamètre externe du tube; et comporte un second trou prolongeant le premier, et ayant un diamètre plus petit afin de constituer un épaulement; le second tronçon du tube étant placé dans le premier trou, en butée contre cet épaulement, et étant brasé à la douille, à l'embouchure du premier trou. Cette caractéristique permet une fixation particulièrement fiable des deux tronçons du tube au dispositif d'étanchéité puisque la pression de l'eau, dans laquelle l'ensemble est immergé, exerce une contrainte principalement sur les épaulements et peu sur les brasures.

L'invention sera mieux comprise et d'autres détails apparaîtront à l'aide de la description, ci-dessous, d'un exemple de réalisation, et des figures l'accompagnant :
- la figure 1 représente une vue de cet exemple de réalisation, après avoir coupé seulement une couche de matière plastique entourant le dispositif;
- la figure 2 représente une vue en coupe montrant l'intérieur de cet exemple de réalisation, avec une échelle plus grande.

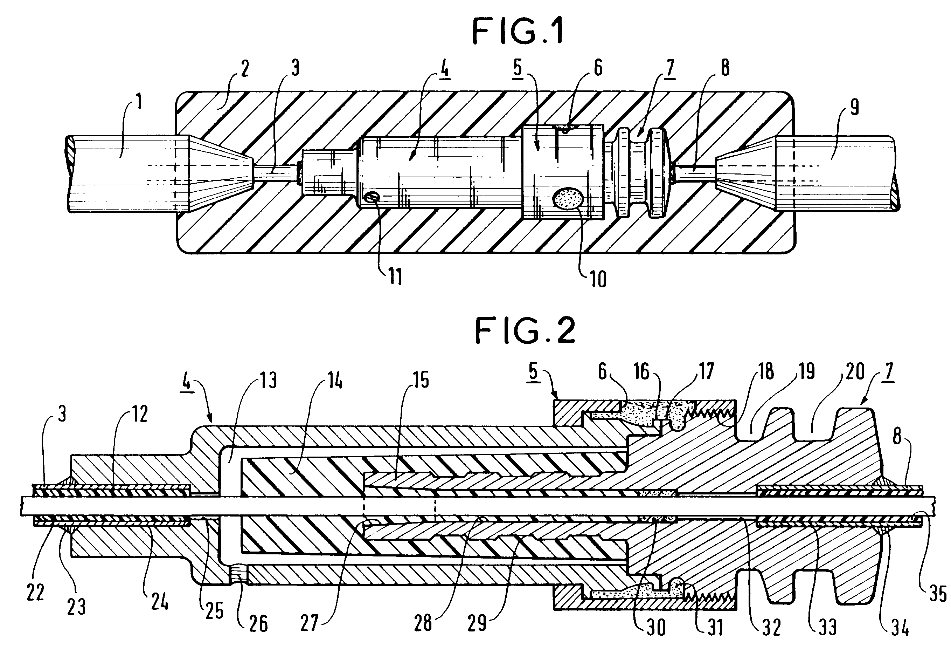

L'exemple de réalisation représenté sur la figure 1 est intercalé entre deux tronçons, 1 et 9, d'une amorce de câble optique. Le tronçon 1 est raccordé à une boîte d'épissurage, et le tronçon 9 est raccordé à un répéteur. L'amorce de câble, de faible longeur, comporte essentiellement : une gaine épaisse en matière plastique, et un tube en acier inoxydable ayant, par exemple, un diamètre externe de 2,3 millimètres et un diamètre interne de 1,5 millimètre. La cavité du tube contient un faisceau de fibres optiques 12, non visible sur la figure 1, ayant par exemple un diamètre de 0,8 millimètre, et qui est mis en place au cours des opérations de réalisation du dispositif d'étanchéité. Avant que les fibres optiques ne soient mises en place, l'amorce de câble optique a été sectionnée.

L'extrémité du tronçon 1 de l'amorce a été dépouillée de sa gaine de matière plastique pour dégager le tronçon de tube d'acier inoxydable 3 sur une certaine longueur. Le tronçon 9 de l'amorce a été dépouillé de sa gaine de matière plastique pour dégager le tronçon de tube d'acier inoxydable 8 sur une certaine longueur. Le tronçon de tube 3 a été brasé à une extrémité d'une douille métallique 4, alors que le tronçon de tube 8 a été brasé à une extrémité d'un bouchon métallique 7. Le bouchon 7 ferme la douille 4 en étant serré contre la douille 4 par une bague de serrage 5.

Cette bague de serrages comporte deux ouvertures, 6 et 10, qui ont servi lors de la réalisation du dispositif à parfaire la liaison entre la douille 4 et le bouchon 7 ainsi qu'il sera vu plus loin; et par lesquelles ont été ensuite remplies les cavités de la bague de serrage 5 avec une résine époxyde, de manière à donner à cette bague une surface extérieure lisse plus appropriée à recevoir un surmoulage. La douille 4 comporte un petit orifice 26 obstrué par une vis 11, sans tête. Cet orifice a été utilisé pour remplir un espace libre à l'intérieur de la douille 4 avec un liquide visqueux hydrophobe.

La douille 4, la bague 5, et le bouchon 7 sont réalisés en cupro-béryllium. Ils assurent la continuité mécanique et, le cas échéant, électrique du tube d'acier inoxydable de l'amorce de câble optique. L'ensemble du dispositif est noyé dans un bloc 2 de polyéthylène moulé.

La figure 2 montre une coupe longitudinale, à une échelle plus grande, de cet exemple de réalisation, sans le bloc de polyéthylène 2, sans les gaines recouvrant les deux tronçons 1 et 9 de l'amorce de câble optique, et sans le liquide visqueux hydrophobe. La douille 4 comporte, à une extrémité, un trou 24 cylindrique ayant un diamètre sensiblement égal au diamètre externe du tronçon de tube 3. Ce trou est prolongé par un trou 25 ayant un diamètre plus petit que celui du trou 24 mais supérieur à celui du faisceau de fibre 12, par exemple voisin du diamètre intérieur du tronçon de tube 3. Le tronçon de tube 3 est appuyé contre l'épaulement constitué par la différence de diamètre entre les trous 24 et 25, et il est fixé à la douille 4 à l'embouchure du trou 24 par un cordon de brasure 23.

Le faisceau de fibres optiques 12 traverse, sans interruption, l'ensemble du dispositif d'étanchéité. Du côté du tronçon 1 de l'amorce, il est contenu dans le tronçon de tube 3 en étant protégé par une gaine 22 de polytétrafluoréthylène. La gaine 22 a une faible longueur car elle est destinée à protéger les fibres optiques contre un échauffement, uniquement dans la zone affectée par la chaleur du moulage du bloc de matière plastique 2. Du côté du tronçon 9 de l'amorce, le faisceau 12 est contenu dans le tronçon de tube 8 en étant protégé par une gaine 35 analogue à la gaine 22.

L'intérieur de la douille 4 contient un bloc de matière plastique d'enrobage 14, recouvrant un canon 15 dans lequel passe le faisceau 12 et qui prolonge le bouchon métallique 7. Il recouvre une portion du faisceau de fibres 12 à l'extérieur et à l'intérieur du canon 15. Il reste un espace libre 13 entre le bloc 14 et la douille 4. Il sera rempli d'un liquide visqueux hydrophobe injecté dans cet espace par le trou 26 percé dans la douille 4 et qui sera fermé par la vis sans tête 11. L'embouchure de la douille 4, du côté du bouchon 7, est bordée par une lèvre de soudage 16 qui s'appuie sur une lèvre 17 du bouchon 7. Le bouchon 7 comporte une partie filetée 18 sur laquelle est vissée la bague de serrage 5. Cette dernière s'appuie sur un épaulement de la douille 4, qui lui permet une liberté de rotation tout en appliquant la douille 4 contre le bouchon 7. Le faisceau de fibres optiques 12 traverse le bouchon 7 en passant successivement par la cavité du canon 15; puis un trou 32; puis un trou 33.

La cavité du canon 15 a, à son extrémité libre, une forme évasée. Sa section transversale est partout supérieure à celle du faisceau de fibres optiques 12. Cette cavité comprend une première partie, 27, de longueur égale approximativement à un cinquième de la profondeur du canon 15, et dans laquelle le diamètre va croissant le long du carton 15 en s'éloignant vers l'embouchure de celui-ci. Dans cet exemple, le canon 15 a une profondeur de 24 millimètres, et la partie 27 a une forme de tronc de cône ayant un diamètre minimal égal à 2 millimètres, avec une ouverture angulaire de 6°. La partie 27 permet de maintenir l'étanchéité le long des parois du canon, en cas de rétreint de la matière plastique, grâce à l'effet d'auto-blocage des surfaces coniques sous l'action de la pression, en cas d'infiltration d'eau dans la douille. La cavité comporte une seconde partie, 28, dont la longueur correspond approximativement à quatre cinquièmes de la profondeur du canon et dont le diamètre est légèrement supérieur au diamètre intérieur du tube. Dans cet exemple, la partie 28 a un diamètre de 2 millimètres. Elle prolonge la zone d'imprégnation du faisceau 12, par la matière plastique du bloc 14, ce qui a pour effet d'allonger les lignes de fuite de l'eau le long du faisceau de fibres 12.

Le trou 32, qui prolonge la partie 28, a un diamètre qui est approximativement égal au diamètre intérieur du tube. Dans cet exemple, le diamètre du trou 32 est de 1,5 millimètre. La différence de diamètre entre le trou 32 et la partie 28 de la cavité constitue un épaulement qui est destiné à immobiliser un tampon 30, de mousse ou d'étoupe. Le tampon 30 a pour fonction d'arrêter la propagation de la matière plastique au moment du moulage du bloc 14. Cette matière plastique remplit l'intérieur du canon 15 jusqu'au tampon 30, par conséquent elle imprègne le faisceau 12 sur toute la longueur du canon 15.

La surface externe du canon 15 a une forme générale cylindrique ayant ici un diamètre nettement supérieur au diamètre du tronçon de tube 8, par exemple 4,5 millimètres. Cette surface externe est creusée de cannelures transversales 29 ayant une profondeur de 0,4 millimètre. La profondeur des cannelures peut être aussi grande qu'on le souhaite, il suffit de prévoir en conséquence l'épaisseur des parois du canon 15.

Le trou 33 a un diamètre sensiblement égal à celui du tronçon de tube 8. La différence de diamètre entre les trous 32 et 33 constitue un épaulement contre lequel est appuyé le tronçon de tube 8. Ce dernier est fixé au bouchon 7 par un cordon de brasure 34, à l'embouchure du trou 33.

On notera que l'épaulement formé à la limite des trous 33 et 32 et celui formé à la limite des trous 24 et 25 supportent l'essentiel de la pression axiale exercée par l'eau dans laquelle l'ensemble est immergé, ces deux épaulements limitent ainsi les contraintes sur les cordons de brasures 34 et 23.

La partie du bouchon 7 qui dépasse de la bague de serrage 5 comporte deux cannelures transversales, 19 et 20, permettant d'ancrer le bouchon 7 à l'intérieur du bloc de matière plastique 2, et rallongeant les lignes de fuite de l'eau.

Les cavités subsistant dans la bague 5 sont remplies d'une résine époxyde 31.

Cet exemple de réalisation est obtenu par les étapes suivantes:
- couper l'amorce de câble, sans y avoir introduit le faisceau de fibres optiques 12, à l'emplacement futur du dispositif d'étanchéité longitudinale;
- enlever la gaine de matière plastique aux extrémités des deux tronçons 1 et 9 de l'amorce, pour faire apparaître une certaine longueur des tronçons de tube, 3 et 8;
- enfiler, dans chacun des tronçons de tube, les morceaux de gaine 22 et 35;
- enfiler le bouchon 7 sur le tronçon de tube 8, jusqu'à la butée, puis déposer le cordon de brasure 34;
- équiper la douille 4 de la bague de serrage 5, et l'emboîter à l'extrémité du tronçon du tube 3, puis déposer le cordon de brasure 23;
- enfiler le faisceau de fibres 12 dans le tronçon de tube 8;
- placer le tampon 30 au fond du canon 15;
- monter, par dessus le canon 15, un moule provisoire dont le volume intérieur est légèrement inférieur à celui de la douille 4;
- couler une résine époxyde dans ce moule; cette résine étant choisie pour ne pas perturber la transmission optique;
- démonter le moule après solidification de la résine formant le bloc de matière plastique 14.
- enfiler le faisceau de fibres 12 dans le tronçon de tube 3, à travers le trou 25 de la douille 4 et emboîter le bloc de matière plastique 14 dans la douille 4;
- assembler la douille 4 au bouchon 7 en vissant la bague de serrage 5 sur le bouchon 7;
- souder la douille 4 et le bouchon 7 par des points de soudure électrique sur les lèvres 16 et 17, au travers des ouvertures 6 et 10 de la bague 5;
- remplir les cavités de la bague de serrage 5, au moyen d'une résine époxyde, de telle sorte que cette résine arrive au ras des ouvertures 6 et 10;
- remplir l'espace 13 de la douille 4 avec un liquide visqueux hydrophobe puis refermer l'orifice de remplissage 26;
- surmouler un bloc de polyéthylène 2 sur l'ensemble de la douille 4, de la bague 5, du bouchon 7, et des partie dénudées des tronçons de tube 3 et 8, pour rétablir la continuité de la gaine de matière plastique recouvrant l'amorce de câble. Cette gaine assure l'étanchéité transversale de l'amorce de câble.

La portée de l'invention ne se limite pas à cet exemple de réalisation. De nombreuses variantes sont à la portée de l'Homme de l'Art, notamment pour réaliser un canon ayant une cavité de diamètre croissant vers son ouverture, et pour réaliser des cannelures transversales sur la surface externe du canon.

## Revendications

1. Câble optique équipé d'un dispositif d'étanchéité longitudinale pour l'âme dudit câble optique, ladite âme étant du type comportant un faisceau de fibres optiques (12) disposé dans la cavité d'un tube métallique (3, 8), le tube métallique étant interrompu sur une longueur prédéterminée de telle façon que ledit faisceau de fibres est à nu sur ladite longueur, formant ainsi un premier (8) et un second (3) tronçons de tube distincts et distants l'un de l'autre, entre lesquels se trouve intercalé ledit dispositif d'étanchéité longitudinale de l'âme; ce dispositif d'étanchéité comportant :
- des moyens (15) pour accrocher une matière plastique d'enrobage, solidaires de l'extrémité libre du premier tronçon (8) du tube;
- un bloc de matière plastique d'enrobage (14) recouvrant à la fois les moyens pour accrocher (15) et les fibres optiques du faisceau (12) sur une partie de ladite longueur de faisceau qui est à nu entre les deux tronçons du tube;
- une douille métallique (4), dont la paroi tubulaire entoure le bloc de matière plastique (14), et dont le fond est fixé de manière étanche, à l'extrémité libre du second tronçon (3) du tube, ledit fond étant percé d'une ouverture (24, 25) pour le passage du faisceau de fibres;
- un bouchon métallique (7) fixé de manière étanche à l'embouchure de la douille (4) qu'il obture, et fixé à l'extrémité libre du premier tronçon (8) du tube, ledit bouchon métallique étant également percé d'une ouverture (32, 33) pour le passage du faisceau de fibres;
caractérisé en ce que les moyens pour accrocher ladite matière plastique d'enrobage comportent un élément tubulaire ou canon (15), intégré au bouchon métallique (7) de façon que la cavité (27, 28) du canon s'étend dans le prolongement de ladite ouverture du bouchon et de la cavité du premier tronçon (8) du tube et débouche sur l'extérieur dudit canon, cette cavité, de section transversale plus grande que celle du faisceau de fibres (12) étant traversée par ce faisceau, au moins une partie de l'espace restant dans ladite cavité, non occupé par le faisceau, étant également remplie de ladite matière plastique d'enrobage; et la paroi externe dudit canon comportant au moins une cannelure transversale (29) destinée à améliorer l'accrochage dudit bloc (14) de matière plastique d'enrobage.

2. Câble selon la revendication 1, caractérisé en ce que la cavité (27, 28) du canon (15) a une forme évasée au moins à son extrémité située du côté du second tronçon de tube (3).

3. Câble selon la revendication 2, caractérisé en ce que la cavité (27, 28) du canon (15) a une section circulaire avec un diamètre constant sur une certaine longueur du canon, à partir de l'extrémité du canon situé du côté du premier tronçon du tube (8); et avec un diamètre croissant ensuite le long du canon jusqu'à l'extrémité libre du canon située du côté opposé au premier tronçon du tube (8).

4. Câble selon la revendication 1, caractérisé en ce que l'ouverture (32, 33) du bouchon métallique (7) comporte une première portion longitudinale (33) ayant un diamètre sensiblement égal au diamètre externe du tube (3, 8), et une seconde portion longitudinale (32) prolongeant la première portion (33), et ayant un diamètre plus petit, afin de constituer un épaulement;
en ce que l'extrémité libre du premier tronçon (8) du tube est placée dans la première portion de l'ouverture (33), en butée contre cet épaulement, et est brasée au bouchon (7), à l'embouchure de la première portion (33);
en ce que l'ouverture (24, 25) de la douille (4) comporte une première portion longitudinale (24) ayant un diamètre sensiblement égal au diamètre externe du tube (3, 8), et une seconde portion longitudinale (25) prolongeant la première portion (24), et ayant un diamètre plus petit, afin de constituer un épaulement;
et en ce que l'extrémité libre du second tronçon (3) du tube est placée dans la première portion (24) de l'ouverture, en butée contre cet épaulement, et est brasée au fond de la douille (4), à l'embouchure de la première portion (24) de l'ouverture.

## Claims

1. An optical cable equipped with a longitudinal sealing device for the core of said optical cable, said core being of the type including a bundle of optical fibers (12) disposed inside the cavity of a metal tube (3, 8), the metal tube being interrupted over a predetermined length in such a manner that said bundle of fibers is bared over said length, thus forming a first length (8) and a second length (3) of the tube, distinct and distant from one another, between which said longitudinal sealing device of the core is interposed, this sealing device comprising:
holding means (15) firmly attached at the free end of the first length of tube (8) for the purpose of holding a covering plastics material;
a block of covering plastics material (14) covering both the holding means (15) and the optical fibers of the bundle (12) over a portion of said length of the bundle that is bared between the two lengths of tube;
a metal sleeve (4), whose tubular surface surrounds the block of plastics material (14), and whose bottom is fixed in sealed manner to the free end of the second length of tube (3); said bottom being pierced by an opening (24,25) to enable the bundle of fibers to pass through, and
a metal plug (7) fixed in a sealed manner to the opening of the sleeve (4) which it closes, and fixed to the free end of the first length of tube (8), said metal plug also being pierced by an opening (32,33) to enable the bundle of fibers to pass through;
the device being characterized in that the holding means for holding said covering plastics material comprise a tubular element or barrel (15), integral with the metal plug (7), in such a manner that the cavity (27, 28) of the barrel extends in line with said opening of the plug and of the cavity of the first length of tube (8) and opens out from said barrel the cross-section of said cavity being greater than the cross-section of the bundle of fibers (12), which bundle of fibers passes through said cavity; at least a portion of the space in said cavity that remains unoccupied by the bundle also being filled with said covering plastics material, and the outside surface of said barrel including at least one transverse groove (29) intended to improve the grip of said block (14) of covering plastics material.

2. A cable according to claim 1, characterized in that the cavity (27, 28) of the barrel (15) is flared in shape, at least at its end situated adjacent to the second length of tube (3).

3. A cable according to claim 2, characterized in that the cavity (27, 28) of the barrel (15) is circular in section having a constant diameter over a certain length of the barrel starting from the end of the barrel situated adjacent to the first length of tube (8), and having a diameter which then increases along the barrel to the free end of the barrel situated furthest from the first length of tube (8).

4. A cable according to claim 1, characterized in that the opening (32,33) of the metal plug (7) includes a first longitudinal portion (33) of diameter substantially equal to the outside diameter of the tube (3, 8), and a second longitudinal portion (32) extending the first portion (33) and having a smaller diameter, thereby constituting a shoulder;
in that the free end of the first length of tube (8) is placed inside the first portion of the opening (33) in abutment against said shoulder, and is brazed to the plug (7) at the mouth of the first portion (33);
in that the opening (24,25) of the sleeve (4) includes a first longitudinal portion (24) of diameter substantially equal to the outside diameter of the tube (3, 8), and a second longitudinal portion (25) extending the first portion (24) and of smaller diameter, thereby constituting a shoulder; and
in that the free end of the second length of tube (3) is placed in the first portion of the opening (24) in abutment against said shoulder, and is brazed to the bottom of the sleeve (4) at the mouth of the first portion of the opening (24).

## Patentansprüche

1. Lichtleitfaserkabel mit einer Längs-Dichtvorrichtung für die Seele dieses Lichtleitfaserkabels, wobei die Seele ein Bündel von Lichtleitfasern (12) aufweist, das im Hohlraum eines Metallrohrs (3, 8) angeordnet ist, wobei das Metallrohr über eine vorbestimmte Länge unterbrochen ist, damit das Faserbündel über diese Lange freigelegt wird und so einen ersten (8) und einen zweiten Abschnitt (3) bildet, die getrennt und voneinander entfernt sind, zwischen denen die Längs-Dichtvorrichtung der Seele angeordnet ist, wobei diese Dichtvorrichtung aufweist:
- Mittel (15), um ein Umhüllungs-Kunststoffmaterial festzuhalten, die mit dem freien Ende des ersten Rohrabschnitts (8) fest verbunden sind,
- einen Block aus Umhüllungs-Kunststoffmaterial (14), der zugleich die Mittel (15) zum Festhalten und die Lichtleitfasern des Bündels (12) über einen Teil der Bündellänge bedeckt, über die die Fasern zwischen den beiden Abschnitten des Rohrs freiliegen,
- eine Metallhülse (4), deren rohrförmige Wand den Block aus Kunststoffmaterial (14) umgibt und deren Boden dicht am freien Ende des zweiten Rohrabschnitts (3) befestigt ist, wobei der Boden eine Öffnung (24, 25) für den Durchlaß des Faserbündels aufweist,
- einen Metallstopfen (7), der dicht an der Mündung der Hülse (4), die er verschließt, und am freien Ende des ersten Rohrabschnitts (8) befestigt ist, wobei der Metallstopfen ebenfalls eine Öffnung (32, 33) für den Durchlaß des Faserbündels aufweist,
dadurch gekennzeichnet, daß die Mittel zum Festhalten des Umhüllungs-Kunststoffmaterials ein rohrförmiges Element oder Rohrstück (15) aufweisen, das so in den Metallstopfen (7) integriert ist, daß der Hohlraum (27, 28) des Rohrstücks sich in der Verlängerung der Öffnung des Stopfens und des Hohlraums des ersten Rohrabschnitts (8) erstreckt und außerhalb des laufs mündet, wobei dieser Hohlraum, deren Querschnitt größer ist als der des Faserbündels (12), von diesem Bündel durchquert wird, wobei zumindest ein Teil des verbleibenden Raums in diesem Hohlraum, der nicht vom Bündel besetzt wird, ebenfalls mit dem Umhüllungs-Kunststoffmaterial gefüllt wird, und wobei die Außenwand dieses Rohrstücks mindestens eine Querrinne (29) aufweist, die das Festhalten des Blocks (14) aus Umhüllungs-Kunststoffmaterial verbessern soll.

2. Kabel nach Anspruch 1, dadurch gekennzeichnet, daß der Hohlraum (27, 28) des Rohrstücks (15) eine ausgeweitete Form zumindest an dem Ende aufweist, das sich auf der Seite des zweiten Rohrabschnitts (3) befindet.

3. Kabel nach Anspruch 2, dadurch gekennzeichnet, daß der Hohlraum (27, 28) des Rohrstücks (15) einen kreisförmigen Querschnitt hat, mit einem konstanten Durchmesser über eine gewisse Länge des Rohrstücks, ausgehend von dem Ende, das sich auf der Seite des ersten Rohrabschnitts (8) befindet, und mit einem sich vergrößernden Durchmesser anschließend entlang des Rohrstücks bis zu dessen freien Ende auf der dem ersten Rohrabschnitt (8) entgegengesetzten Seite.

4. Kabel nach Anspruch 1, dadurch gekennzeichnet,
- daß die Öffnung (32, 33) des Metallstopfens (7) einen ersten Längsbereich (33) mit einem Durchmesser im wesentlichen gleich dem Außendurchmesser des Rohrs (3, 8) und einen zweiten Längsbereich (3) aufweist, der den ersten Bereich verlängert und einen kleineren Durchmesser hat, um eine Schulter zu bilden,
- daß das freie Ende des ersten Abschnitts (8) des Rohrs in dem ersten Bereich der Öffnung (33) in Anschlag gegen diese Schulter angeordnet ist und mit dem Stopfen (7) an der Mündung des ersten Bereichs (33) verlötet ist,
- daß die Öffnung (24, 25) der Hülse (4) einen ersten Längsbereich (24) mit einem Durchmesser im wesentlichen gleich dem Außendurchmesser des Rohrs (3, 8) und einen zweiten Längsbereich (25) aufweist, der den ersten Bereich (24) verlängert und einen kleineren Durchmesser hat, um eine Schulter zu bilden,
- und daß das freie Ende des zweiten Rohrabschnitts (3) im ersten Bereich (24) der Öffnung in Anschlag gegen diese Schulter angeordnet ist, und an den Boden der Hülse (4) an der Mündung des ersten Bereichs (24) der Öffnung angelötet ist.
